# EUROPÄISCHE PATENTANMELDUNG

(11) **EP 0 608 462 A1**
(43) Veröffentlichungstag der Anmeldung: **03.08.1994**
(21) Anmeldenummer: 93101409.6
(22) Anmeldetag: 29.01.1993
(51) Int. Cl.: C04B 35/00, C04B 12/00

(54) **Keramisches Bindemittel sowie Verfahren zu seiner Herstellung und seiner Verwendung**

(71) Anmelder: SOLWAY INTER LIMITED, Dublin 2 (IE)
(72) Erfinder: Podjachev, Anatolii G., 30500 Kursk (RU); Nemetz, Igor I., 308012 Belgorod (RU); Trubitzin Michael A., 308001 Belgorod (RU)
(74) Vertreter: Glawe, Delfs, Moll & Partner

(57) **Zusammenfassung**

Aus Quarzsand wird durch Mahlen in einer Kugelmühle eine feinstkörnige, teilweise kolloidale Dispersion von SiO₂ in wäßriger Phase hergestellt, deren Korngrößenanteil von 0,01 bis 0,1 µm mindestens 1 Gew.-%, vorzugsweise mehr als 2 Gew.-% des gesamten SiO₂ beträgt. Vorzugsweise ist ein Korngrößenanteil von 0,001 bis 0,01µm vorhanden, der mehr als ein 1 Gew.-%, vorzugsweise mehr als 5 Gew.-% beträgt. Die so hergestellte Dispersion eignet sich zur Verwendung als Bindemittel für keramische Erzeugnisse, wobei aus dem Bindemittel sowie einem Zuschlagstoff und Wasser keramische Erzeugnisse lediglich durch Formen, Verdichten und Lufttrocknen hergestellt werden können, die auch ohne Brennen oder Autoklavbehandlung hervorragende Festigkeitswerte, geringe Wasseraufnahme und hohe Frostbeständigkeit aufweisen.

## Beschreibung

Die Erfindung betrifft ein keramisches Bindemittel, bestehend aus einer Dispersion von feinstgemahlenem Siliciumdioxid in wäßriger Phase. Die Erfindung betrifft auch ein Verfahren zur Herstellung des Bindemittels sowie ein Verfahren zur Herstellung von keramischen Erzeugnissen unter Verwendung des Bindemittels.

Es ist bekannt, Dispersionen von feinkörmigem SiO₂ als Bindemittel für keramische Erzeugnisse zu verwenden. Bei einem aus US-A-2 446 975 bekannten Bindemittel reicht die Korngrößenverteilung von 0,1mm bis ca. 10mm. Aus einem solchen Bindemittel und Zuschlagstoffen hergestellte keramische Erzeugnisse müssen bei hohen Temperaturen von 1400 bis 1450°C gebrannt werden, um die nötige Festigkeit zu erreichen. Ein anderes, aus US-A-3 207 612 bekanntes Bindemittel enthält amorphes SiO₂ in feiner Körnung von 0,08mm bis 0,80mm, welches durch Elektroschmelzen von Quarz bei 1700 bis 1750°C hergestellt werden muß und zusammen mit kollidaler SiO₂-Lösung verwendet wird. Auch bei Verwendung dieses Bindemittels wird eine ausreichende Festigkeit der keramischen Erzeugnisse nur durch einen Brennprozeß bei einer Temperatur in Bereich von 980°C erreicht. Ein Bindemittel auf der Basis einer Dispersion von SiO₂ mit einem Reinheitsgrand von mindestens 99,8%, mit einer Korngrößenverteilung von 1 bis 6µm, beschreibt JP-A-63-139 045. Auch die hiermit hergestellten keramischen Erzeugnisse müssen gebrannt werden. In den beiden letztgenannten Fällen ist das Bindemittel wegen seiner synthetischen Herstellung sehr teuer.

Der Erfindung liegt die Aufgabe zugrunde, ein Bindemittel der angegebenen Art zu schaffen, das relativ einfach aus natürlichem Rohstoff herzustellen ist und es ermöglicht, keramische Erzeugnisse von hoher mechanischer Festigkeit, geringer Wasseraufnahme und hoher Frostbeständigkeit durch einen Herstellungsprozeß ohne Brennen zu erhalten.

Erfindungsgemäß ist ein Bindemittel der genannten Art dadurch gekennzeichnet, daß das SiO₂ eine stetige Korngrößenverteilung von 0,01 bis 100µm Korngröße hat und daß der Korngrößenanteil von 0,01 bis 0,1µm mindestens 1 Gew.-% des gesamten SiO₂ beträgt.

In einer bevorzugten weiteren Ausgestaltung der Erfindung ist in dem Bindemittel zusätzlich ein Korngrößenanteil von 0,001 bis 0,1µm vorhanden, der mehr als ein 1 Gew.-%, vorzugsweise mehr als 5 Gew.-% beträgt.

Die Unteransprüche beziehen sich auf weitere vorteilhafte Ausgestaltungen des erfindungsgemäßen Bindemittels, des Verfahrens zu seiner Herstellung und des Verfahrens zu seiner Verwendung.

Es hat sich überraschenderweise gezeigt, daß durch Verwendung des erfindungsgemäßen Bindemittels, sowie mit zu üblichen Zuschlagstoffen wie z.B. Quarzsand und Wasser, keramische Erzeugnisse der verschiedensten Art durch Formen, Verdichten und anschließendes Trocknen, aber ohne jeden Brennprozeß und ohne zusätzliche Bindemittel wie Zement oder dergleichen hergestellt werden können. Diese Erzeugnisse sind hinsichtlich ihrer mechanischer Festigkeit, geringer Wasseraufnahme und Frostbeständigkeit den bisher bekannten, durch Brennen herstellbaren Erzeugnissen mindestens gleichwertig.

Bei dem erfindungsgemäßen Bindemittel erfüllen die Körner im Korngrößenbereich von 0,1 bis 100µm die Funktion eines Mikrofüllstoffes, wobei die granulometrische Zusammensetzung eine maximale Packungsdichte gewährleistet. Hierdurch wird der Wasserverbrauch beim Einrühren mit Wasser verringert und eine Segregation und Entmischung der Teilchen verhindert. Dies führt dazu, daß beim Trocknen praktisch keine Neigung zu Rißbildung besteht und praktisch kein Schwund eintritt. Die Teilchen im Größenbereich von 0,1 bis 0,01µm, vorzugsweise sogar bis 0,001µm, liegen als Kolloidlösung (Sol) vor, die gute Bindeeigenschaften liefert. Aufgrund der Stetigkeit bzw. Gleichmäßigkeit der Korngrößenverteilung in dem gesamten Bereich einschließlich des kolloidalen Bereiches ergibt sich eine optimale Ausfüllung der Kornzwischenräume, und es werden im wesentlichen nur sphärische Mikroporen gebildet, was wesentlich zur Verbesserung der Wasser- und Frostbeständigkeit beiträgt.

Die Erfindung wird im folgenden anhand von Ausführungsbeispielen näher erläutert.

### Beispiel 1:

Als Rohstoff dient aus natürlichem Vorkommen gewonnener, überwiegend aus Quarz (SiO₂) bestehender Sand. Der Sand hatte die nachstehend angegebene Korngrößenverteilung

| | | | | | |
|---|---|---|---|---|---|
| Korngröße (mm) | 0-01 | 0,1-0,25 | 0,25-0,5 | 0,5-1 | 1-2 |
| Gew.-% | 0,6 | 17,8 | 32,6 | 15,7 | 33,3 |

sowie die folgende chemische Zusammensetzung

| | | | | | | | | |
|---|---|---|---|---|---|---|---|---|
| Zusammensetz. | SiO₂ | CaO | MgO | MnO₄ | Al₂O₃ | NaO | TiO₂ | Rest |
| Gew.-% | 90,6 | 2,58 | 0,06 | 0,03 | 4,98 | 0,19 | 0,02 | 1,03 |

Dieser Quarzsand wurde in einer Kugelmühle mit Keramikmahlkörpern mit einem Wasseranteil von 13,0% gemahlen, und zwar unter dreimaliger Zuladung des Quarzsandes. Als Kriterium für die Beendigung des Mahlens diente die Dichte der gewonnenen Suspension von 2,10 bis 2,24g/cm³. Die Dauer des Mahlens betrug von 15 bis 42 Stunden. In der nachstehenden Tabelle 1 sind vier verschiedene Korngrößenzusammensetzungen des erfindungsgemäßen Bindemittels angegeben, die je nach der Dauer des Mahlens erhalten wurden.

**Tabelle 1**

| Korngrößenbereich µm | Gew.-% | | | |
|---|---|---|---|---|
| | Beispiele | | | |
| | 1 | 2 | 3 | 4 |
| 0,01 - 0,02 | 0,1 | 0,2 | 0,5 | 1,2 |
| 0,02 - 0,03 | 0,1 | 0,2 | 0,5 | 0,8 |
| 0,03 - 0,04 | 0,1 | 0,2 | 0,4 | 0,6 |
| 0,04 - 0,05 | 0,1 | 0,2 | 0,2 | 0,7 |
| 0,05 - 0,06 | 0,1 | 0,3 | 0,3 | 0,7 |
| 0,06 - 0,08 | 0,2 | 0,4 | 0,6 | 1,0 |
| 0,08 - 0,1 | 0,3 | 0,5 | 0,5 | 1,0 |
| 0,1 - 1 | 8,0 | 13,5 | 17,0 | 19,0 |
| 1 - 10 | 31,0 | 37,0 | 42,0 | 43,0 |
| 10 - 20 | 21,0 | 20,5 | 20,0 | 19,0 |
| 20 - 40 | 28,0 | 23,0 | 15,0 | 11,0 |
| 40 - 100 | 11,0 | 4,0 | 3,0 | 2,0 |

Mit den Bindemitteln gemäß Spalten 1 bis 4 der Tabelle 1 wurden Proben von keramischen Körpern hergestellt, wobei diese 1 bis 2 Gew.-% des Bindemittels enthielten. Die Herstellung der Proben erfolgte durch Formen und Verdichten nach dem Schlicker-Gießverfahren, Lufttrocknen bei Raumtemperatur während 12 Stunden und Nachtrocknen bei einer Lufttemperatur von 110 bis 120°C. Die anschließend gemessenen Eigenschaften der Proben sind aus der nachstehenden Tabelle 2 ersichtlich.

**Tabelle 2**

| Bezeichnung der Eigenschaften der Proben | 1 | 2 | 3 | 4 |
|---|---|---|---|---|
| Wasserbeständigkeitskoeffizient, K_{W} | 0,72 | 0,75 | 0,78 | 0,74 |
| Frostbeständigkeit, Zyklen | 19 | 31 | 42 | 29 |
| Wasseraufnahmevermögen, W, % | 9,6 | 9,1 | 8,5 | 9,1 |
| Offene Porosität, P_{offen.}, % | 18,4 | 17,2 | 16,0 | 17,0 |
| Festigkeitsgrenze bei Kompression, _{Kompr}., ^{(MPa)} | 96 | 107 | 118 | 99,3 |
| Biegefestigkeitsgrenze, _{Biege}, ^{(MPA)} | 32,2 | 36,3 | 40 | 34,6 |

Das Muster in der Spalte 1 entspricht den Mindestwerten der Festigkeit sowie Wasser- und Frostbeständigkeit. Die Muster gemäß den Spalten 2 und 3 der Tabelle 2 sind wegen der Erhöhung des Anteiles der feinsten Korngrößen in allen diesen Eigenschaften deutlich verbessert.

Man erkennt, daß es mit dem erfindungsgemäßen Bindemittel möglich ist, billige baukeramische Erzeugnisse herzustellen, die die erforderlichen physikalischen und mechanischen Eigenschaften aufweisen, wobei zu deren Herstellung keine energieaufwendigen Schritte wie Brennen oder Autoklavbehandlung erforderlich sind.

Optimale Eigenschaften des Bindemittels werden erreicht, wenn dieses zusätzlich Calciumoxid (CaO) in einem Anteil von ca. 1 Gew.-% enthält. Bei Erhöhung des Gehaltes von CaO bis 3 Gew.-% sinkt die Festigkeit. Sind mehr als 3 Gew.-% CaO enthalten, wird die Oberflächenladung der Teilchen gesenkt und man beobachtet Heterokoagulation. Die Suspension verliert ihre Beweglichkeit, bekommt deutlich ausgeprägten Thixotropiecharakter im Fließverhalten, und die damit hergestellten keramischen Erzeugnisse haben einen höheren Porenanteil und damit eine geringere Wasser- und Frostbeständigkeit.

### Beispiel 2:

In weiterer Ausgestaltung der Erfindung wurde die Herstellung des Bindemittels gemäß Beispiel 1 so modifiziert, daß durch längeres und intensiveres Mahlen der Korngrößenanteil von unter 0,01µm erhöht wurde. Hierzu wurde Quarzsand mit natürlicher Feuchtigkeit unter Zugabe von 12 bis 18% Wasser in die Rohr- Kugelmühle gegeben und so lange gemahlen, bis die entsprechende Korngrößenverteilung erreicht wurde. Die nachstehende Tabelle 3 zeigt die Korngrößenverteilung von vier verschiedenen entsprechend hergestellten Bindemitteln.

**Tabelle 3**

| Korngröße (µm) | 1. | 2. | 3. | 4. |
|---|---|---|---|---|
| 0,001 - 0,0015 | 0,06 | 0,063 | 0,065 | 0,07 |
| 0,0015 - 0,002 | 0,07 | 0,072 | 0,075 | 0,08 |
| 0,002 - 0,0025 | 0,09 | 0,093 | 0,094 | 0,1 |
| 0,0025 - 0,01 | 6,0 | 7,0 | 8,0 | 10,0 |
| 0,01 - 0,06 | 13,0 | 14,0 | 19,0 | 15,0 |
| 0,06 - 0,1 | 12,0 | 13,0 | 14,0 | 15,0 |
| 0,1 - 1,0 | 4,0 | 6,0 | 5,5 | 7,0 |
| 1,0 - 20,0 | 53,0 | 39,0 | 31,0 | 27,0 |
| 20,0 - 50,0 | 5,0 | 6,0 | 7,0 | 12,0 |
| 50,0 - 70,0 | 3,0 | 6,0 | 5,0 | 7,0 |
| 70,0 - 100,0 | 1,7 | 4,0 | 3,5 | 3,7 |

### Beispiel 3:

Den gemäß Beispiel 2 hergestellten Bindemitteln wurde als zusätzliche Komponente Wasserglaslösung hinzugefügt. Dies erfolgte in der Weise, daß das gemahlene Material aus der Kugelmühle in einen Stabilisator eingegeben wurde, in den auch die wässrige Wasserglaslösung mit einem Verhältnis von 1:15 bis 1:0,5 des Bindemittels eingeführt wurde. Die Alkalilösungsdichte der Wasserglaslösung betrug 1,28 bis 1,01. Das Ganze wurde 10 bis 24 Stunden lang vermischt, bis das fertige Bindemittel erhalten wurde.

Aus diesem Bindemittel wurden würfelförmige Proben von keramischen Erzeugnissen durch Formen, Verdichten und Lufttrocknen, aber ohne Brennen oder Autoklavbehandlung, hergestellt. Die an diesen Proben gemessenen physikalischen Eigenschaften sind in der Tabelle 4 dargestellt. Man erkennt gegenüber den Werten in Tabelle 2 eine deutliche Verbesserung. Gleichzeitig wird eine deutliche Verringerung der zur Erreichung dieser Werte erforderlichen Abbindezeit der keramischen Erzeugnisse beobachtet.

**Tabelle 4**

| Eigenschaften der Proben | 1. | 2. | 3. | 4. |
|---|---|---|---|---|
| Wasserbeständigkeit | 0,79 | 0,82 | 0,84 | 0,83 |
| Offene Porosität, % | 15,8 | 15,0 | 13,5 | 15,5 |
| Druckfestigkeitsgrenze, MPa | 122 | 130 | 138 | 128 |
| Biegfestigkeitsgrenze, MPa | 48 | 52 | 64 | 50 |

## Patentansprüche

1. Keramisches Bindemittel, bestehend aus einer Dispersion von feinstgemahlenen Siliciumdioxid (SiO₂) in wässriger Phase, dadurch **gekennzeichnet,** daß das SiO₂ eine stetige Korngrößenverteilung von 0,01 bis 100µm Korngröße hat und daß der Korngrößenanteil von 0,01 bis 0,1µm mindestens 1 Gew.-% des gesamten SiO₂ beträgt.

2. Bindemittel nach Anspruch 1, dadurch **gekennzeichnet,** daß der Korngrößenanteil von 0,01 bis 0,1µm mindestens 2 Gew.-%, vorzugsweise mindestens 5 Gew.-% beträgt.

3. Keramisches Bindemittel nach Anspruch 1 oder 2, dadurch **gekennzeichnet,** daß zusätzlich ein Korngrößenanteil von 0,001 bis 0,01µm vorhanden ist, der mehr als 1 Gew.-%, vorzugsweise mehr als 5 Gew.-% beträgt.

4. Bindemittel nach Anspruch 1, dadurch **gekennzeichnet,** daß der Korngrößenanteil in jedem der Bereiche zwischen den Korngrößen 0,01µm, 0,02µm, 0,03µm usw. bis 0,1µm jeweils mindestens 0,1 Gew.-%, vorzugsweise mindestens 0,5 Gew.-% beträgt.

5. Bindemittel nach einem der Ansprüche 1 bis 4, dadurch **gekennzeichnet,** daß der Anteil der wässrigen Phase an dem Bindemittel 5 bis 20 Gew.-%, vorzugsweise 9 bis 11 Gew.-% beträgt.

6. Bindemittel nach einem der Ansprüche 1 bis 5, dadurch **gekennzeichnet,** daß es zusätzlich einen Anteil von Calciumoxid (CaO) von maximal 5 Gew.-% enthält.

7. Bindemittel nach Anspruch 6, dadurch **gekennzeichnet,** daß der Anteil von CaO 1 bis 3 Gew.-% beträgt.

8. Bindemittel nach einem der Ansprüche 1 bis 7, dadurch **gekennzeichnet,** daß es zusätzlich Wasserglaslösung im Mengenverhältnis von 1:15 bis 1:0,5 enthält.

9. Verfahren zum Herstellen eines Bindemittels nach einem der Ansprüche 1 bis 8, dadurch **gekennzeichnet,** daß Quarzsand mit der wässrigen Phase im gewünschten Mengenverhältnis vermischt und die Mischung in einer Kugelmühle so lange gemahlen wird, bis keine Körner mit mehr als 100µm Größe mehr vorhanden sind und der Korngrößenanteil unter 0,01µm mehr als 1 Gew.-% beträgt, wobei durch das Mahlen eine kolloidale Dispersion der feinsten Korngrößenanteile in der wässrigen Phase erzeugt wird.

10. Verfahren nach Anspruch 9, dadurch **gekennzeichnet,** daß der durch das Mahlen erhaltenen Suspension eine wässrige Wasserglaslösung mit einem Verhältnis von 1:15 bis 1:0,5 zugesetzt wird.

11. Verfahren zur Herstellung von keramischen Erzeugnissen unter Verwendung des Bindemittels nach einem der Ansprüche 1 bis 8, wobei ein Füllstoff mit dem Bindemittel und gegebenenfalls Wasser zu einer fließfähigen oder formbaren Masse gemischt, die Masse zu einem Formkörper geformt und gegebenenfalls verdichtet und schließlich der Formkörper ausgehärtet wird, dadurch **gekennzeichnet,** daß das Aushärten durch Lufttrocknen ohne Brennen erfolgt.

12. Verfahren nach Anspruch 11, dadurch **gekennzeichnet,** daß das Bindemittel in einer Menge von weniger als 50 Gew.-%, insbesondere in einer Menge von 10 bis 20 Gew.-% der gesamten Masse verwendet wird.

13. Verfahren nach Anspruch 11, dadurch **gekennzeichnet,** daß das Lufttrocknen bei erhöhter Temperatur unter 200°C, insbesondere einer Temperatur von 80-120°C durchgeführt wird.
